(19) **Europäisches Patentamt / European Patent Office / Office européen des brevets**

(11) **EP 3 431 313 B1**

(12) **EUROPEAN PATENT SPECIFICATION**

(45) Date of publication and mention of the grant of the patent:
**05.01.2022 Bulletin 2022/01**

(51) Int Cl.:
***B60C 23/06*** *(2006.01)*

(21) Application number: **18182842.7**

(22) Date of filing: **11.07.2018**

(54) **TIRE ROTATION SPEED CORRECTION APPARATUS**

REIFENROTATIONSGESCHWINDIGKEITKORREKTURVORRICHTUNG

APPAREIL DE CORRECTION DE VITESSE DE ROTATION DE PNEUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2017 JP 2017140376**

(43) Date of publication of application:
**23.01.2019 Bulletin 2019/04**

(73) Proprietor: **Sumitomo Rubber Industries, Ltd.**
**Kobe-shi, Hyogo 651-0072 (JP)**

(72) Inventor: **MAEDA, Yusuke**
**Kobe-shi, Hyogo 651-0072 (JP)**

(74) Representative: **TBK**
**Bavariaring 4-6**
**80336 München (DE)**

(56) References cited:
**EP-A1- 0 652 121     JP-A- 2004 338 456**

**Description**

FIELD OF INVENTION

The present invention relates to a rotation speed correction apparatus, method, and program that correct the rotation speed of a driving wheel tire mounted on a vehicle.

BACKGROUND

Keeping tires at proper air pressure is important for ensuring smooth travel of a vehicle. This is because problems such as uncomfortable riding conditions, poor fuel efficiency, and so on can arise if the air pressure is below the proper value. Thus systems that automatically detect a loss in tire pressure (Tire Pressure Monitoring Systems; TPMS) have been under research for some time. Information of a loss of pressure in a tire can be used in warnings provided to the driver, for example.

Methods for detecting a loss of tire pressure include directly measuring the air pressure in a tire by, for example, attaching a pressure sensor to the tire, as well as indirectly evaluating a loss of tire pressure using another indication value. The Dynamic Loaded Radius (DLR) method is known as one such method. When the pressure in a tire is low, the tire will collapse slightly during travel, which reduces the dynamic loaded radius and results in an increase in rotation speed. The DLR method uses this phenomenon to estimate loss of tire pressure from the rotation speed of the tire (see Japanese Patent No. 4809199, for example).

Japanese Patent No. 4809199 discloses a correction apparatus that uses the DLR method, and mentions three indication values, called "DELI" to "DEL3", as pressure loss indication values for evaluating loss of pressure using the DLR method. In Japanese Patent No. 4809199, DELI to DEL3 are defined as follows. Note that V1 to V4 express the rotation speeds of the tires on the left-front wheel, the right-front wheel, the left-rear wheel, and the right-rear wheel, respectively.

$$DEL1 = \{(V1 + V4)/2 - (V2 + V3)/2\} / \{(V1 + V2 + V3 + V4)/4\} \times 100 \ (\%)$$

$$DEL2 = \{(V1 + V2)/2 - (V3 + V4)/2\} / \{(V1 + V2 + V3 + V4)/4\} \times 100 \ (\%)$$

$$DEL3 = \{(V1 + V3)/2 - (V2 + V4)/2\} / \{(V1 + V2 + V3 + V4)/4\} \times 100 \ (\%)$$

The rotation speed of a tire increases as the tire loses pressure, and thus the pressure loss indication values such as DELI to DEL3 change as well. A loss of pressure can thus be detected by setting, as a threshold, the pressure loss indication value from when the pressure has dropped by a pressure loss amount, which is used as a detection target.

Japanese Patent No. 4809199 is an example of related art.

Furthermore, document EP 0 652 121 A1 discloses a tire air-pressure reduction judging method and apparatus, comprising obtaining, as functions of speeds or forward/backward accelerations, the ratios of the rotational angular speeds of the driving tires to the rotational angular speeds of the non-driving tires, said rotational angular speeds being detected while the vehicle is travelled, storing the relationship between said speeds or forward/backward accelerations and said ratios thus obtained, obtaining the speed or forward/backward acceleration of the vehicle while the vehicle actually travels, obtaining, based on said stored relationship, the ratio corresponding to said speed or forward/backward acceleration thus obtained, correcting said rotational angular speeds based on said ratio thus obtained, and detecting a reduction in the air pressure of a tire based on said rotational angular speeds thus corrected. Moreover, document JP 2004 338456 A refers to a slip ratio computing method to find the slip ratio of the tire installed on the four-wheel vehicle capable of controlling the distribution of driving torque to a front axle and a rear axle.

SUMMARY OF THE INVENTION

Incidentally, the rotation speed of a tire, which determines the pressure loss indication value as described above, is affected by tire slippage as well as a loss of tire pressure. Slippage occurs primarily with driving wheel tires, and is more likely to occur at greater wheel torques. In other words, the rotation speed of a driving wheel tire varies not only under the influence of a loss of pressure, but also under the influence of slippage that changes depending on the wheel torque. Thus the detection of a loss of pressure on the basis of the pressure loss indication value, which is calculated from the rotation speed, may be less accurate depending on travel conditions such as the wheel torque. It is therefore desirable to eliminate the influence of slippage from the rotation speed of a driving wheel tire. Eliminating the influence of slippage from the rotation speed of a driving wheel tire can be desirable not only when detecting a loss of tire pressure on the basis of the pressure loss indication value, but also when carrying out various types of control on the basis of the rotation speed of the driving wheel tire, such as braking control.

In light of the above-described knowledge, the applicants of this application proposed a technique in a previous application (application no. JP 2016-112916) that detects a loss of pressure on the basis of a pressure loss indication value. According to this technique, a linear relationship between the pressure loss indication value and wheel torque is identified, and a pressure loss indication value corresponding to a wheel torque at which no slippage or almost no slippage occurs in the tire (ideally, 0 N·m) is calculated on the basis of that linear relationship. In other words, according to the technique disclosed in the previous application, the influence of slippage can be eliminated from the pressure loss indication value, which makes it possible to determine loss of tire pressure without being affected by slippage.

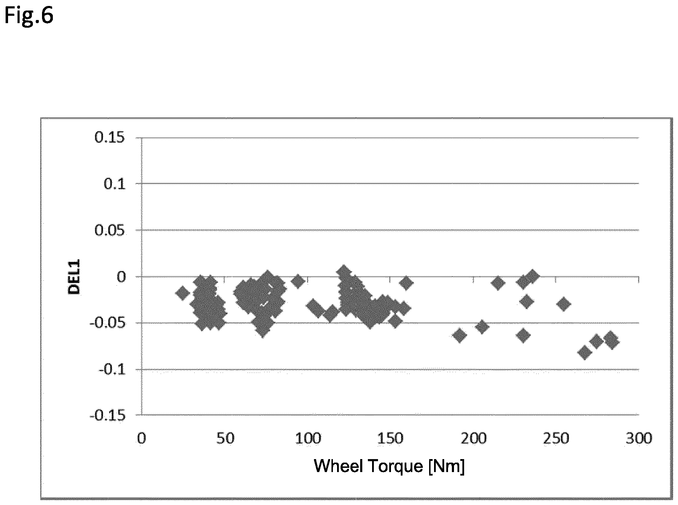

However, if the tire pressure has not dropped and the load of the vehicle is uniformly balanced between the left and right sides, there are cases where the influence of slippage in the driving wheel tire cannot be eliminated with the aforementioned DELI, meaning that a linear relationship between the wheel torque and DELI cannot be identified. FIG. 6 is a graph plotting the relationship between DELI and the wheel torque, obtained experimentally. In such a case, it is difficult to identify the linear relationship between the wheel torque and DELI, which can make it difficult to eliminate the influence of slippage from DELI.

An object of the present invention is to provide a rotation speed correction apparatus, method, and program capable of eliminating the influence of tire slippage, which changes depending on the wheel torque, from the rotation speed of a driving wheel tire.

This object is achieved by a rotation speed correction apparatus according to claim 1, a rotation speed correction method according to claim 8, and rotation speed correction program according to claim 9. Further features and advantageous modifications are shown in the dependent claims.

A rotation speed correction apparatus according to a first aspect of the present invention is a rotation speed correction apparatus that corrects a rotation speed of a driving wheel tire mounted on a vehicle, and includes a rotation speed obtainment unit, a comparative value calculation unit, a torque obtainment unit, and a rotation speed calculation unit. The rotation speed obtainment unit obtains the rotation speed of the driving wheel tire and a rotation speed of a following wheel tire mounted on the vehicle. The comparative value calculation unit calculates a comparative value between the rotation speed of the driving wheel tire and the rotation speed of the following wheel tire on the basis of the rotation speeds of the driving wheel tire and the following wheel tire. The torque obtainment unit obtains a wheel torque. The rotation speed calculation unit identifies a linear relationship between the comparative value and the wheel torque, and on the basis of the rotation speed of the following wheel tire and the linear relationship, calculates a rotation speed of the driving wheel tire in which influence of slippage has been eliminated.

A rotation speed correction apparatus according to a second aspect of the present invention is the rotation speed correction apparatus according to the first aspect, wherein as the comparative value, the comparative value calculation unit calculates a first comparative value comparing a rotation speed of one driving wheel tire and a rotation speed of one following wheel tire, among two driving wheel tires and two following wheel tires mounted on the vehicle.

A rotation speed correction apparatus according to a third aspect of the present invention is the rotation speed correction apparatus according to the second aspect, wherein as the comparative value, the comparative value calculation unit further calculates a second comparative value comparing a rotation speed of the other driving wheel tire and a rotation speed of the other following wheel tire, among the two driving wheel tires and the two following wheel tires.

A rotation speed correction apparatus according to a fourth aspect of the present invention is the rotation speed correction apparatus according to any one of the first to third aspects, further including a pressure loss detection unit. The pressure loss detection unit calculates a pressure loss indication value for determining a loss of pressure in a tire mounted on the vehicle on the basis of the rotation speed of the following wheel tire and the rotation speed of the driving wheel tire calculated by the rotation speed calculation unit, and detects the loss of pressure in the tire on the basis of the pressure loss indication value.

A rotation speed correction apparatus according to a fifth aspect of the present invention is the rotation speed correction apparatus according to the fourth aspect, wherein when four tires including the driving wheel tire and the following wheel tire mounted on the vehicle are taken as a first tire, a second tire, a third tire, and a fourth tire, the pressure loss indication value is an indication value defined so as to increase as the rotation speeds of the first tire and the fourth tire increase and decrease as the rotation speeds of the second tire and the third tire increase, or to increase as the rotation speeds of the second tire and the third tire increase and decrease as the rotation speeds of the first tire and the fourth tire increase.

A rotation speed correction apparatus according to a sixth aspect of the present invention is the rotation speed correction apparatus according to the fourth or fifth aspect, further including a pressure loss warning unit. The pressure loss warning unit makes a pressure loss warning in the case where a state of pressure loss of the tire has been detected.

A rotation speed correction apparatus according to a seventh aspect of the present invention is the rotation speed correction apparatus according to any one of the first to sixth aspects, wherein the comparative value is a ratio between the rotation speed of the driving wheel tire and the rotation speed of the following wheel tire.

A rotation speed correction method according to an eighth aspect of the present invention is a rotation speed correction method for correcting a rotation speed of a driving wheel tire mounted on a vehicle, and includes the following steps.

- obtaining the rotation speed of the driving wheel tire and a rotation speed of a following wheel tire mounted on the vehicle;
- calculating a comparative value between the rotation speed of the driving wheel tire and the rotation speed of the following wheel tire on the basis of the rotation speeds of the driving wheel tire and the following wheel tire;
- obtaining a wheel torque;
- identifying a linear relationship between the comparative value and the wheel torque; and
- calculating, on the basis of the rotation speed of the following wheel tire and the linear relationship, a rotation speed of the driving wheel tire in which influence of slippage has been eliminated.

A rotation speed correction program according to a ninth aspect of the present invention is a rotation speed correction program for correcting a rotation speed of a driving wheel tire mounted on a vehicle, and causes a computer to execute the following steps.

- obtaining the rotation speed of the driving wheel tire and a rotation speed of a following wheel tire mounted on the vehicle;
- calculating a comparative value between the rotation speed of the driving wheel tire and the rotation speed of the following wheel tire on the basis of the rotation speeds of the driving wheel tire and the following wheel tire;
- obtaining a wheel torque;
- identifying a linear relationship between the comparative value and the wheel torque; and
- calculating, on the basis of the rotation speed of the following wheel tire and the linear relationship, a rotation speed of the driving wheel tire in which influence of slippage has been eliminated.

Slippage of the driving wheel tire increases as the wheel torque increases, and the comparative value between the rotation speed of the driving wheel tire and the rotation speed of the following wheel tire changes as the slippage increases. The comparative value and the wheel torque can therefore be in a linear relationship. Thus according to the first aspect of the present invention, this linear relationship is identified. Then, the rotation speed of the driving wheel tire in which the influence of slippage has been eliminated is calculated on the basis of the linear relationship and the rotation speed of the following wheel. Accordingly, the influence of tire slippage, which changes in accordance with the wheel torque, can be eliminated from the rotation speed of the driving wheel tire.

BRIEF DESCRIPTION OF THE DRAWINGS

FIG. 1 is a schematic diagram illustrating a state in which a rotation speed correction apparatus according to an embodiment of the present invention is mounted in a vehicle.
FIG. 2 is a block diagram illustrating the electrical configuration of the rotation speed correction apparatus.
FIG. 3 is a flowchart illustrating the flow of a pressure loss detection process, including a rotation speed correction process.
FIG. 4 is a graph plotting data of a wheel torque WT and a comparative value H1 obtained experimentally by the inventors of the present invention.
FIG. 5 is a graph plotting data of the wheel torque WT and a comparative value H2 obtained experimentally by the inventors of the present invention.
FIG. 6 is a graph plotting data of the wheel torque WT and a pressure loss indication value DELI obtained experimentally by the inventors of the present invention.

DETAILED DESCRIPTION OF THE PREFERRED EMBODIMENTS

A tire rotation speed correction apparatus, method, and program according to an embodiment of the present invention will be described next with reference to the drawings.

1. Configuration of Rotation Speed Correction Apparatus

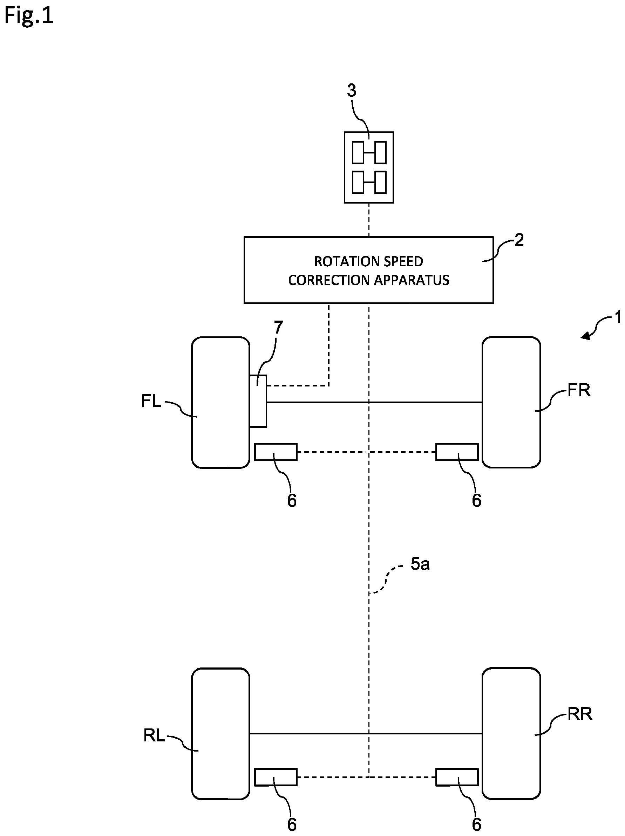

FIG. 1 is a schematic diagram illustrating a state in which a rotation speed correction apparatus (called simply a "correction apparatus" hereinafter) 2 according to the present embodiment is mounted in a vehicle 1. The vehicle 1 is a four-wheeled vehicle including a left-front wheel tire FL, a right-front wheel tire FR, a left-rear wheel tire RL, and a right-rear wheel tire RR. The vehicle 1 is a front-wheel drive vehicle, and thus the tires FL and FR are driving wheel tires and the tires RL and RR are following wheel tires. A correction apparatus 2 has a function for correcting the rotation speed of the driving wheel tires FL and FR to eliminate the influence of slippage, and a function for detecting a loss of pressure in the tires FL, FR, RL, and RR. The correction apparatus 2 detects a loss of pressure in the tires FL, FR, RL, and RR on the basis of the rotation speed of the following wheel tires RL and RR and the corrected rotation speed of the driving wheel tires FL and FR. Upon detecting a loss of pressure in the tires FL, FR, RL, and RR, the correction apparatus 2 makes a warning to that effect through a warning display device 3 installed in the vehicle 1.

In the present embodiment, a wheel torque sensor ("WT sensor" hereinafter) 7 is attached to the left-front wheel, which is one of the driving wheels. The WT sensor 7 detects a wheel torque WT of the vehicle 1. The WT sensor 7 is connected to the correction apparatus 2 by a communication line 5a, and information of the wheel torque WT detected by the WT sensor 7 is sent to the correction apparatus 2 in real time.

The structure, attachment position, and so on of the WT sensor 7 are not particularly limited as long as the wheel torque of a driving wheel of the vehicle 1 can be detected. Various types of wheel torque sensors are commercially available, and because the configurations thereof are known, detailed descriptions thereof will not be given here. The wheel torque can be detected without the WT sensor 7 as well. For example, the wheel torque can be estimated on the basis of engine torque obtained from an engine control unit.

In the present embodiment, the states of pressure loss of the tires FL, FR, RL, and RR are detected on the basis of wheel speed (rotation speed). A wheel speed sensor 6 is attached to each of the tires FL, FR, RL, and RR (and more precisely, the wheels on which the tires FL, FR, RL, and RR are mounted). Each wheel speed sensor 6 detects wheel speed information of the tire to which that sensor is attached. The wheel speed sensor 6 is connected to the correction apparatus 2 by the communication line 5a, and the wheel speed information detected by each wheel speed sensor 6 is sent to the correction apparatus 2 in real time.

Any type of sensor can be used as the wheel speed sensor 6 as long as the wheel speeds of the tires FL, FR, RL, and RR can be detected during travel. For example, a type of sensor that measures the wheel speed from a signal outputted from an electromagnetic pickup can be used, or a type of sensor that generates electricity using the rotation and measures the wheel speed from the resulting voltage, as with a dynamo, can be used. The attachment positions of the wheel speed sensors 6 are also not particularly limited, and can be selected as appropriate in accordance with the sensor type, as long as the positions enable the wheel speeds to be detected.

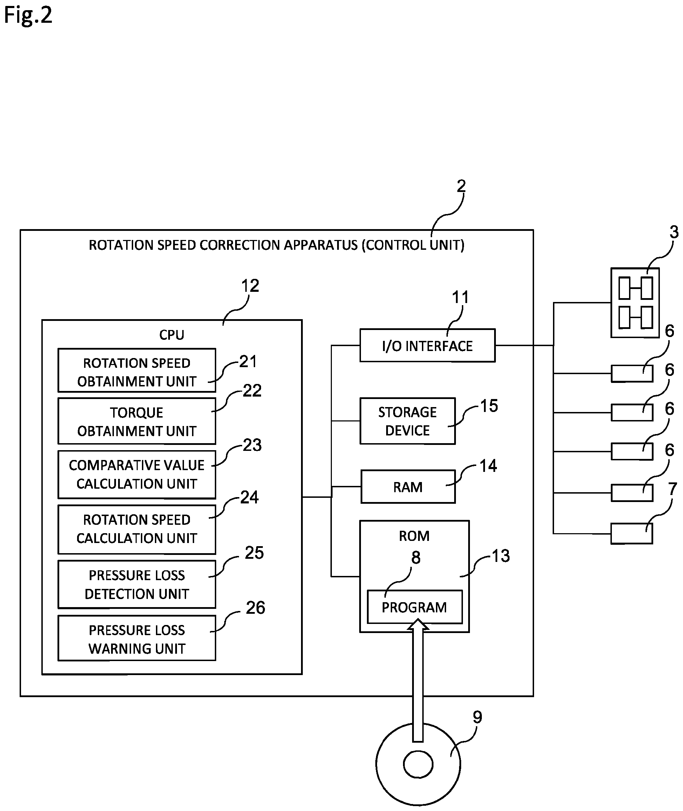

FIG. 2 is a block diagram illustrating the electrical configuration of the correction apparatus 2. As illustrated in FIG. 2, the correction apparatus 2 is a control unit installed in the vehicle 1, and includes an I/O interface 11, a CPU 12, ROM 13, RAM 14, and a non-volatile and rewritable storage device 15. The I/O interface 11 is a communication device for communicating with external devices such as the wheel speed sensors 6 and the warning display device 3. A program 8 for controlling the operations of the various units of the vehicle 1 is stored in the ROM 13. The program 8 is loaded into the ROM 13 from a storage medium 9 such as a CD-ROM. By reading out the program 8 from the ROM 13 and executing the program 8, the CPU 12 virtually operates as a rotation speed obtainment unit 21, a torque obtainment unit 22, a comparative value calculation unit 23, a rotation speed calculation unit 24, a pressure loss detection unit 25, and a pressure loss warning unit 26. The operations of the units 21 to 26 will be described later in detail. The storage device 15 is constituted by a hard disk, flash memory, or the like. Note that the program 8 may be stored in the storage device 15 rather than the ROM 13. The RAM 14 and the storage device 15 are used as needed for operations carried out by the CPU 12.

The warning display device 3 can be implemented in any desired form, such as a liquid-crystal display element or a liquid-crystal monitor, as long as the occurrence of a loss of pressure can be communicated to a user. For example, the warning display device 3 may have four lamps, each corresponding to one of the four tires FL, FR, RL, and RR, arranged so as to correspond to the actual arrangement of the tires. Although the attachment position of the warning display device 3 can also be selected as desired, the warning display device 3 is preferably provided in a position easily noticeable by the driver, such as in an instrument panel. If the control unit (the correction apparatus 2) is connected to a car navigation system, a monitor for car navigation can also be used as the warning display device 3. If the monitor is used as the warning display device 3, warnings can be displayed in the monitor as icons, text information, or the like.

2. Pressure Loss Detection Process

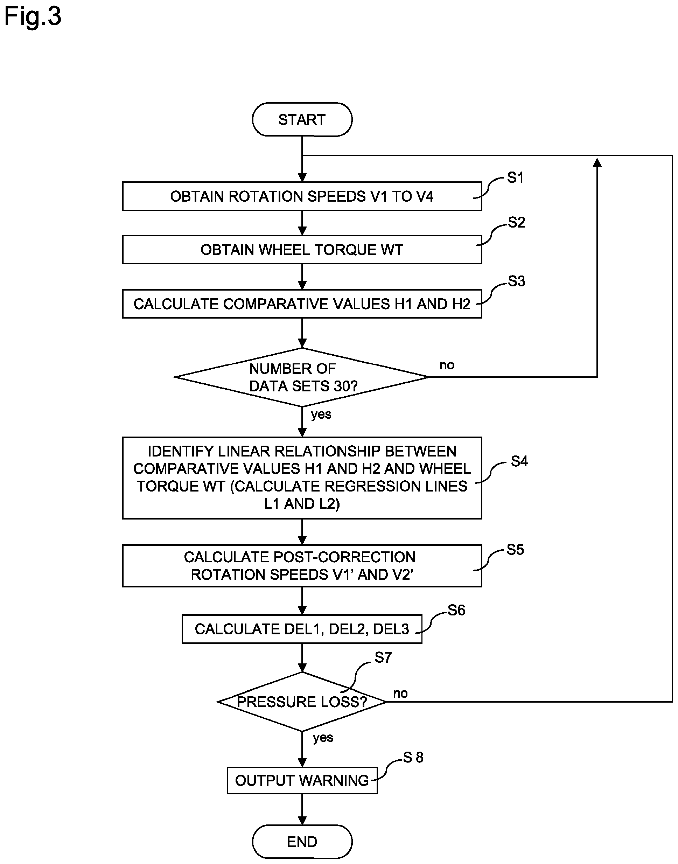

A pressure loss detection process for detecting a loss of pressure in the tires FL, FR, RL, and RR, which includes a rotation speed correction process for correcting the rotation speeds of the driving wheel tires FL and FR, will be described next with reference to FIG. 3. The process illustrated in FIG. 3 follows the dynamic loaded radius (DLR) method, and is carried out, for example, when power is supplied to the electrical systems of the vehicle 1. The pressure loss detection process according to the present embodiment identifies which of the four tires FL, FR, RL, and RR have lost pressure. More specifically, a tire that has lost pressure can be detected according to the following 14 patterns.

(1) loss of pressure in FL only
(2) loss of pressure in FR only
(3) loss of pressure in RL only
(4) loss of pressure in RR only
(5) loss of pressure in FL and FR only
(6) loss of pressure in FL and RL only
(7) loss of pressure in FL and RR only
(8) loss of pressure in FR and RL only
(9) loss of pressure in FR and RR only
(10) loss of pressure in RL and RR only
(11) loss of pressure in FL, FR, and RL only
(12) loss of pressure in FL, FR, and RR only
(13) loss of pressure in FL, RL, and RR only
(14) loss of pressure in FR, RL, and RR only

First, in step S1, the rotation speed obtainment unit 21 obtains rotation speeds (wheel speeds) V1 to V4. V1 to V4 are the rotation speeds of the tires FL, FR, RL, and RR, respectively. The rotation speed obtainment unit 21 receives output signals from the wheel speed sensors 6 detected at a predetermined sampling period $\Delta T$, and converts those output signals to the rotation speeds V1 to V4.

Next, in step S2, the torque obtainment unit 22 obtains the wheel torque WT of the vehicle 1. The torque obtainment unit 22 receives an output signal from the WT sensor 7, and converts that signal into the wheel torque WT. Note that the output signal of the WT sensor 7 received at this time is data from the same time, or substantially the same time, as the output signals from the wheel speed sensors 6 received in the most recent step S1.

Next, in step S3, the comparative value calculation unit 23 calculates, from the rotation speeds V1 to V4 of the tires FL, FR, RL, and RR, comparative values H1 and H2 between the rotation speed of the driving wheel tires and the rotation speed of the following wheel tires. The comparative values H1 and H2 are defined as values that decrease as the rotation speed of the driving wheel tires increases and increase as the rotation speed of the following wheel tires increases. However, in another embodiment, the comparative values H1 and H2 can be defined as values that increase as the rotation speed of the driving wheel tires increases and decrease as the rotation speed of the following wheel tires increases.

As long as the comparative values H1 and H2 have the abovementioned characteristics, H1 and H2 can be defined through a variety of methods. In the present embodiment, H1 and H2 are calculated as ratios between the rotation speed of the driving wheel tires and the rotation speed of the following wheel tires, according to the following formulas.

$$H1 = V3/V1$$

$$H2 = V4/V2$$

According to another embodiment, H1 and H2 can be defined as follows.

$$H1 = V3^2/V1^2$$

$$H2 = V4^2/V2^2$$

Alternatively, H1 and H2 can be defined as follows.

$$H1 = V4/V1$$

$$H2 = V3/V2$$

The comparative value H1 defined as described above is a comparative value comparing the rotation speed of one of the two driving wheel tires FL and FR with the rotation speed of one of the two following wheel tires RL and RR. Likewise, the comparative value H2 defined as described above is a comparative value comparing the rotation speed of the other of the two driving wheel tires FL and FR with the rotation speed of the other of the two following wheel tires RL and RR.

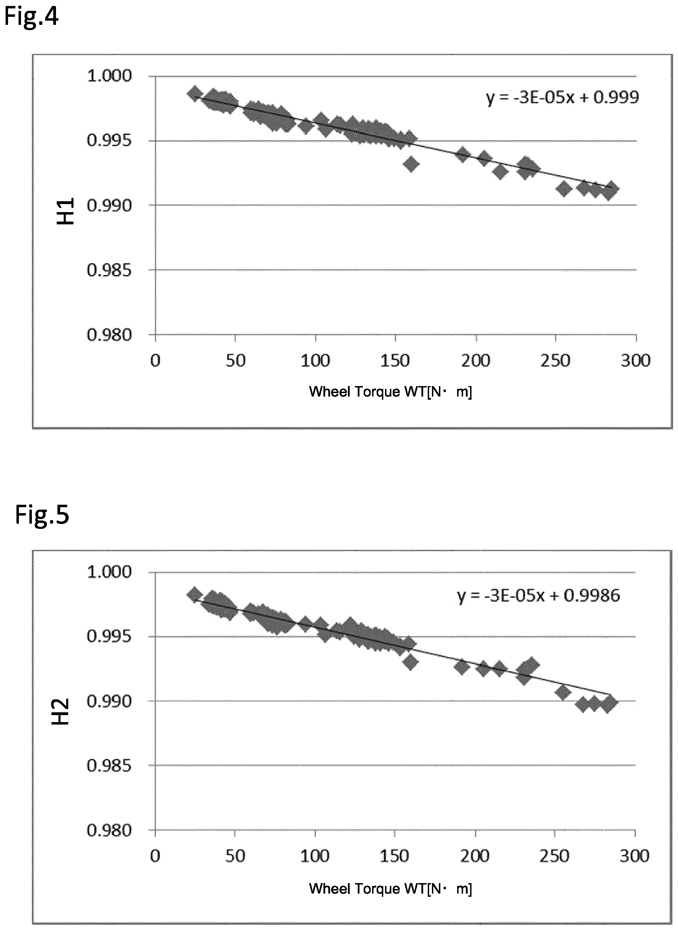

Next, in step S4, the rotation speed calculation unit 24 identifies linear relationships between the wheel torque WT and the comparative values H1 and H2, respectively. Furthermore, in step S5 following thereafter, rotation speeds V1' and V2' of the driving wheel tires FL and FR, from which the influence of tire slippage has been eliminated, are obtained on the basis of the linear relationships identified in step S4. The principles of steps S4 and S5 for eliminating the influence of slippage will be described using FIGS. 4 and 5. FIGS. 4 and 5 illustrate the results of experiments carried out by the inventors of the present invention.

First, it is thought that if the wheel torque WT is less than or equal to a set value, the tires will not slip or will slip very little. However, the driving wheel tires slip more as the wheel torque WT increases. As slippage increases, the rotation speed of the driving wheel tires detected by the wheel speed sensors 6 decreases, and a difference between the rotation speed of the driving wheel tires and the rotation speed of the following wheel tires increases. Accordingly, a linear relationship holds true between the wheel torque WT, and the comparative values H1 and H2 of the rotation speed of the driving wheel tires and the rotation speed of the following wheel tires. FIGS. 4 and 5 illustrate experimental data supporting this. FIGS. 4 and 5 are graphs plotting the relationships between the wheel torque WT and the comparative values H1 and H2 measured under conditions in which the tires FL, FR, RL, and RR are at standard pressure. Here, H1 = V3/V1 and H2 = V4/V2.

As illustrated in FIGS. 4 and 5, the relationships between the wheel torque WT and the comparative values H1 and H2 can be expressed as the following regression lines L1 and L2, respectively.

$$L1: \quad H1 = a1 \times WT + b1$$

$$L2: \quad H2 = a2 \times WT + b2$$

The comparative value H1 when the wheel torque WT is 0 (N·m), i.e., an intercept b1 of the regression line L1, is the comparative value H1 when there is no influence of slippage, which changes in accordance with the wheel torque WT. Likewise, the comparative value H2 when the wheel torque WT is 0 (N·m), i.e., an intercept b2 of the regression line L2, is the comparative value H2 when there is no influence of slippage, which changes in accordance with the wheel torque WT. Accordingly, the rotation speeds V1' and V2' of the driving wheel tires FL and FR, in which the influence of slippage has been eliminated, are expressed through the following formulas, using the rotation speeds V3 and V4 of the following wheel tires RL and RR.

$$V1' = V3/b1 \qquad ...\text{Formula 1}$$

$$V2' = V4/b2 \qquad ...\text{Formula 2}$$

In addition to a situation where the wheel torque WT is 0 (N·m), the value of the wheel torque WT when the tires do not slip or slip very little is defined as a reference wheel torque $WT_R$. If the above-described linear relationships and the reference wheel torque $WT_R$ are used, the rotation speeds V1' and V2' where there is no or little influence of slippage can be found through the following formulas.

$$V1' = V3/(a1 \times WT_R + b1) \qquad ...\text{Formula 3}$$

$$V2' = V4/(a2 \times WT_R + b2) \qquad ...\text{Formula 4}$$

Based on the above principles, in step S4, the rotation speed calculation unit 24 identifies, on the basis of the wheel torque WT and the comparative values H1 and H2 obtained in steps S1 to S3, the regression lines L1 and L2 expressing the linear relationships between the wheel torque WT and the comparative values H1 and H2. Specifically, coefficients a1, a2, b1, and b2 are calculated. Note that at least two each of datasets of (WT,H1) and (WT,H2) are required to identify the regression lines. Thus in the present embodiment, steps S1 to S3 are repeatedly executed until a predetermined number of datasets have been obtained. Once the number of datasets has exceeded a predetermined number, each time a new dataset is obtained, the linear relationships are identified using the predetermined number of the most recent datasets. The method for identifying the regression lines L1 and L2 is not particularly limited. For example, the least-squares method can be used, and an iterative least-squares method can also be used to make the processing more efficient.

In step S5, the rotation speed calculation unit 24 uses Formula 1 or 3 to calculate the rotation speed V1' of the driving wheel tire FL, in which the influence of slippage has been eliminated, on the basis of the coefficients a1 and b1 and the rotation speed V3 of the following wheel tire RL. Likewise, the rotation speed calculation unit 24 uses Formula 2 or 4 to calculate the rotation speed V2' of the driving wheel tire FR, in which the influence of slippage has been eliminated, on the basis of the coefficients a2 and b2 and the rotation speed V4 of the following wheel tire RR. If the comparative values are defined as H1 = V4/V1 and H2 = V3/V2,V3 and V4 are switched in Formulas 1 to 4. As such, V1' is calculated on the basis of V4 rather than V3, and V2' is calculated on the basis of V3 rather than V4.

Next, in step S6, the pressure loss detection unit 25 calculates pressure loss indication values DELI to DEL3, for determining the state of pressure loss in the tires, on the basis of the post-correction rotation speeds V1' and V2' of the driving wheel tires FL and FR and the rotation speeds V3 and V4 of the following wheels. DELI, DEL2, and DEL3 are indication values having the following characteristics.

DEL1: an indication value that increases as the rotation speeds V1' and V4 increase and decreases as the rotation speeds V2' and V3 increase, or increases as the rotation speeds V2' and V3 increase and decreases as the rotation speeds V1' and V4 increase

DEL2: an indication value that increases as the rotation speeds V1' and V2' increase and decreases as the rotation speeds V3 and V4 increase, or increases as the rotation speeds V3 and V4 increase and decreases as the rotation speeds V1' and V2' increase

DEL3: an indication value that increases as the rotation speeds V1' and V3 increase and decreases as the rotation speeds V2' and V4 increase, or increases as the rotation speeds V2' and V4 increase and decreases as the rotation speeds V1' and V3 increase

Note that as a tire continues to lose pressure, the dynamic loaded radius decreases, which increases the rotation speed and changes the values of the pressure loss indication values DELI to DEL3. In the pressure loss detection process according to the present embodiment, the states of pressure loss in the tires are detected in step S7, which will be described later, by detecting changes of the pressure loss indication values DELI to DEL3 from reference values. Furthermore, the pressure loss indication values DELI to DEL3 in which the influence of tire slippage has been eliminated are obtained here by using the rotation speeds V1' and V2'. This increases the accuracy of detecting pressure loss in the tires.

DELI to DEL3 can be defined through a variety of methods, as long as DELI to DEL3 have the above-described characteristics. In the present embodiment, DELI to DEL3 are calculated according to the following formulas.

$$DEL1 = \{(V1' + V4)/(V2' + V3) - 1\} \cdot 100 \ (\%)$$

$$DEL2 = \{(V1' + V2')/(V3 + V4) - 1\} \cdot 100 \ (\%)$$

$$DEL3 = \{(V1' + V3)/(V2' + V4) - 1\} \cdot 100 \ (\%)$$

According to another embodiment, DELI to DEL3 can be defined as follows, as described in the Background Art section, for example.

$$DEL1 = [\{(V1' + V4)/2 - (V2' + V3)/2\} \ / \ \{(V1' + V2' + V3 + V4) \ / \ 4\}] \cdot 100 \ (\%)$$

$$DEL2 = [\{(V1' + V2')/2 - (V3 + V4)/2\} \ / \ \{(V1' + V2' + V3 + V4) \ / \ 4\}] \cdot 100 \ (\%)$$

$$DEL3 = [\{(V1' + V3)/2 - (V2' + V4)/2\} / \{(V1' + V2' + V3 + V4) / 4\}] \cdot 100 \ (\%)$$

Alternatively, DELI, DEL2, and DEL3 can be defined as follows.

$$DEL1 = (V1'^2 + V4^2) - (V2'^2 + V3^2)$$

$$DEL2 = (V1'^2 + V2'^2) - (V3^2 + V4^2)$$

$$DEL3 = (V1^2 + V3^2) - (V2'^2 + V4^2)$$

As described above, DELI is an indication value that increases as the rotation speeds of two of the four wheels, located on one of the diagonal lines, increase, and decreases as the rotation speeds of the two wheels located on the other of the diagonal lines increase. DEL3 is an indication value that increases as the rotation speeds of two of the four wheels, located on the left side or the right side, increase, and decreases as the rotation speeds of the remaining two wheels increase. On the other hand, DEL2 is an indication value that increases as the rotation speeds of two of the four wheels, located in the front or in the back, increase, and decreases as the rotation speeds of the remaining two wheels increase.

Once the correction of the rotation speeds V1 and V2 and the calculation of DELI to DEL3 in steps S5 and S6 are complete, the pressure loss detection unit 25 determines the states of pressure loss (step S7). Specifically, the pressure loss detection unit 25 first detects one-wheel pressure losses (1) to (4), two-wheel pressure losses (5) to (10), and three-wheel pressure losses (11) to (14), according to the above-described 14 tire pressure loss patterns, using DELI to DEL3 calculated in step S6. To describe in more detail, it is determined whether each of DELI to DEL3 has increased greater than or equal to a threshold, decreased greater than or equal to a threshold, or whether an amount of change is less than or equal to a threshold. Then, the pattern in which the tires have lost pressure is determined according to a combination of these results. Relationships between the patterns of changes in DELI to DEL3 and the patterns of tire pressure loss are as indicated in Table 1, for example. It is assumed that the upper limit thresholds and the lower limit thresholds used here are set for each of DELI to DEL3 through experiments or simulations using the vehicle 1, and are stored in the storage device 15 in advance.

Table 1

| | DEL 1 | DEL2 | DEL3 |
|---|---|---|---|
| (1) LOSS OF PRESSURE IN FL ONLY | GREATER THAN OR EQUAL TO UPPER LIMIT THRESHOLD | GREATER THAN OR EQUAL TO UPPER LIMIT THRESHOLD | GREATER THAN OR EQUAL TO UPPER LIMIT THRESHOLD |
| (2) LOSS OF PRESSURE IN FR ONLY | LESS THAN OR EQUAL TO LOWER LIMIT THRESHOLD | GREATER THAN OR EQUAL TO UPPER LIMIT THRESHOLD | LESS THAN OR EQUAL TO LOWER LIMIT THRESHOLD |
| (3) LOSS OF PRESSURE IN RL ONLY | LESS THAN OR EQUAL TO LOWER LIMIT THRESHOLD | LESS THAN OR EQUAL TO LOWER LIMIT THRESHOLD | GREATER THAN OR EQUAL TO UPPER LIMIT THRESHOLD |
| (4) LOSS OF PRESSURE IN RR ONLY | GREATER THAN OR EQUAL TO UPPER LIMIT THRESHOLD | LESS THAN OR EQUAL TO LOWER LIMIT THRESHOLD | LESS THAN OR EQUAL TO LOWER LIMIT THRESHOLD |
| (5) LOSS OF PRESSURE IN FL AND FR ONLY | BETWEEN LOWER LIMIT THRESHOLD AND UPPER LIMIT THRESHOLD | GREATER THAN OR EQUAL TO UPPER LIMIT THRESHOLD | BETWEEN LOWER LIMIT THRESHOLD AND UPPER LIMIT THRESHOLD |
| (6) LOSS OF PRESSURE IN FL AND RL ONLY | BETWEEN LOWER LIMIT THRESHOLD AND UPPER LIMIT THRESHOLD | BETWEEN LOWER LIMIT THRESHOLD AND UPPER LIMIT THRESHOLD | GREATER THAN OR EQUAL TO UPPER LIMIT THRESHOLD |

(continued)

| | DEL 1 | DEL2 | DEL3 |
|---|---|---|---|
| (7) LOSS OF PRESSURE IN FL AND RR ONLY | GREATER THAN OR EQUAL TO UPPER LIMIT THRESHOLD | BETWEEN LOWER LIMIT THRESHOLD AND UPPER LIMIT THRESHOLD | BETWEEN LOWER LIMIT THRESHOLD AND UPPER LIMIT THRESHOLD |
| (8) LOSS OF PRESSURE IN FR AND RL ONLY | LESS THAN OR EQUAL TO LOWER LIMIT THRESHOLD | BETWEEN LOWER LIMIT THRESHOLD AND UPPER LIMIT THRESHOLD | BETWEEN LOWER LIMIT THRESHOLD AND UPPER LIMIT THRESHOLD |
| (9) LOSS OF PRESSURE IN FR AND RR ONLY | BETWEEN LOWER LIMIT THRESHOLD AND UPPER LIMIT THRESHOLD | BETWEEN LOWER LIMIT THRESHOLD AND UPPER LIMIT THRESHOLD | LESS THAN OR EQUAL TO LOWER LIMIT THRESHOLD |
| (10) LOSS OF PRESSURE IN RL AND RR ONLY | BETWEEN LOWER LIMIT THRESHOLD AND UPPER LIMIT THRESHOLD | LESS THAN OR EQUAL TO LOWER LIMIT THRESHOLD | BETWEEN LOWER LIMIT THRESHOLD AND UPPER LIMIT THRESHOLD |
| (11) LOSS OF PRESSURE IN FL, FR, AND RL ONLY | LESS THAN OR EQUAL TO LOWER LIMIT THRESHOLD | GREATER THAN OR EQUAL TO UPPER LIMIT THRESHOLD | GREATER THAN OR EQUAL TO UPPER LIMIT THRESHOLD |
| (12) LOSS OF PRESSURE IN FL, FR, AND RR ONLY | GREATER THAN OR EQUAL TO UPPER LIMIT THRESHOLD | GREATER THAN OR EQUAL TO UPPER LIMIT THRESHOLD | LESS THAN OR EQUAL TO LOWER LIMIT THRESHOLD |
| (13) LOSS OF PRESSURE IN FL, RL, AND RR ONLY | GREATER THAN OR EQUAL TO UPPER LIMIT THRESHOLD | LESS THAN OR EQUAL TO LOWER LIMIT THRESHOLD | GREATER THAN OR EQUAL TO UPPER LIMIT THRESHOLD |
| (14) LOSS OF PRESSURE IN FR, RL, AND RR ONLY | LESS THAN OR EQUAL TO LOWER LIMIT THRESHOLD | LESS THAN OR EQUAL TO LOWER LIMIT THRESHOLD | LESS THAN OR EQUAL TO LOWER LIMIT THRESHOLD |

The pressure loss detection unit 25 determines whether or not a loss of pressure corresponding to any of the patterns (1) to (14) has been detected, and returns to step S1 if no such loss of pressure has been detected. However, if a loss of pressure according to any of the patterns has been detected, the process moves to step S8.

In step S8, the pressure loss warning unit 26 outputs a pressure loss warning through the warning display device 3. At this time, the warning display device 3 can make the warning so that the specific tires that have lost pressure can be identified, or can simply make a warning that a tire or tires have lost pressure. The pressure loss warning can also be made as audio output.

3. Variations

The following variations are possible, for example. The content of the following variations can also be combined as appropriate.

3-1

In the above-described embodiment, the rotation speeds V1' and V2' calculated in steps S1 to S5 are used to detect a loss of pressure in the tires. However, the processing of steps S1 to S5 is not limited to detecting a loss of pressure in tires, and can also be used in various types of control carried out on the basis of the rotation speeds of the driving wheel tires, such as controlling the braking of the vehicle.

3-2

In the above-described embodiment, H1 and H2 are calculated in step S3. However, only H1, or only H2, may be calculated in accordance with the characteristics of the vehicle, or as necessary. In this case, the rotation speed of one of the driving wheel tires FL and FR is corrected.

3-3

The function for correcting the rotation speed of the driving wheel tires according to the present invention can also be applied in rear-wheel drive vehicles. In this case, the rotation speeds V3 and V4 of the rear wheel tires RL and RR, which are the driving wheel tires, can be corrected, through processing corresponding to that described in the foregoing embodiment. Furthermore, the correction is not limited to four-wheel vehicles, and can also be applied in three-wheeled vehicles, six-wheeled vehicles, and the like.

3-4

The comparative values H1 and H2 can also be defined as follows.

$$H1 = V1/V3$$

$$H2 = V2/V4$$

In this case, the post-correction rotation speeds V1' and V2' can be calculated according to the following formulas.

$$V1' = (a1 \times WT_R + b1) \times V3$$

$$V2' = (a2 \times WT_R + b2) \times V4$$

Alternatively, the comparative values H1 and H2 can be defined as follows.

$$H1 = V1/V4$$

$$H2 = V2/V3$$

In this case, the post-correction rotation speeds V1' and V2' can be calculated according to the following formulas.

$$V1' = (a1 \times WT_R + b1) \times V4$$

$$V2' = (a2 \times WT_R + b2) \times V3$$

Alternatively, the comparative values H1 and H2 can be defined as follows (which was also mentioned in the foregoing embodiment).

$$H1 = V4/V1$$

$$H2 = V3/V2$$

In this case, the post-correction rotation speeds V1' and V2' can be calculated according to the following formulas.

$$V1' = V4/(a1 \times WT_R + b1)$$

$$V2' = V3/(a2 \times WT_R + b2)$$

LIST OF REFERENCE NUMERALS

| 1 | Vehicle |
|---|---|
| 2 | Correction apparatus (computer) |
| 3 | Warning display device |
| 5a | Communication line |
| 6 | Wheel speed sensor |
| 7 | Wheel torque sensor |
| 8 | Program |
| 11 | I/O interface |
| 12 | CPU |
| 13 | ROM |
| 14 | RAM |
| 15 | Storage device |
| 21 | Rotation speed obtainment unit |
| 22 | Torque obtainment unit |
| 23 | Comparative value calculation unit |
| 24 | Rotation speed calculation unit |
| 25 | Pressure loss detection unit |
| 26 | Pressure loss warning unit |
| H1 | First comparative value |
| H2 | Second comparative value |
| FL | Left-front wheel tire |
| FR | Right-front wheel tire |
| RL | Left-rear wheel tire |
| RR | Right-rear wheel tire |
| V1 | Rotation speed of left-front wheel tire |
| V2 | Rotation speed of right-front wheel tire |
| V3 | Rotation speed of left-rear wheel tire |
| V4 | Rotation speed of right-rear wheel tire |

**Claims**

1. A rotation speed correction apparatus (2) configured to correct a rotation speed of a driving wheel tire mounted on a vehicle (1), the apparatus (2) comprising:

   a rotation speed obtainment unit (21) configured to obtain the rotation speed of the driving wheel tire and a rotation speed of a following wheel tire mounted on the vehicle (1); and
   a comparative value calculation unit (23) configured to calculate a comparative value between the rotation speed of the driving wheel tire and the rotation speed of the following wheel tire on the basis of the rotation speeds of the driving wheel tire and the following wheel tire,
   **characterized by**
   a torque obtainment unit (22) configured to obtain a wheel torque applied to a driving wheel of the vehicle (1); and
   a rotation speed calculation unit (24) configured to identify a linear relationship between the comparative value and the wheel torque, and on the basis of the rotation speed of the following wheel tire and the linear relationship, calculate a rotation speed of the driving wheel tire in which influence of slippage has been eliminated.

2. The rotation speed correction apparatus (2) according to claim 1,
   wherein as the comparative value, the comparative value calculation unit (23) is configured to calculate a first comparative value comparing a rotation speed of one driving wheel tire and a rotation speed of one following wheel tire, among two driving wheel tires and two following wheel tires mounted on the vehicle (1).

3. The rotation speed correction apparatus (2) according to claim 2,
wherein as the comparative value, the comparative value calculation unit (23) is further configured to calculate a second comparative value comparing a rotation speed of the other driving wheel tire and a rotation speed of the other following wheel tire, among the two driving wheel tires and the two following wheel tires.

4. The rotation speed correction apparatus (2) according to any one of claims 1 to 3, further comprising:
a pressure loss detection unit (25) configured to calculate a pressure loss indication value for determining a loss of pressure in a tire mounted on the vehicle (1) on the basis of the rotation speed of the following wheel tire and the rotation speed of the driving wheel tire calculated by the rotation speed calculation unit, and detect the loss of pressure in the tire on the basis of the pressure loss indication value.

5. The rotation speed correction apparatus (2) according to claim 4,

wherein when four tires (FL, FR, RL, RR) including the driving wheel tire and the following wheel tire mounted on the vehicle (1) are taken as a first tire, a second tire, a third tire, and a fourth tire,
the pressure loss indication value is an indication value defined so as to increase as the rotation speeds of the first tire and the fourth tire increase and decrease as the rotation speeds of the second tire and the third tire increase, or to increase as the rotation speeds of the second tire and the third tire increase and decrease as the rotation speeds of the first tire and the fourth tire increase.

6. The rotation speed correction apparatus (2) according to claim 4 or 5, further comprising:
a pressure loss warning unit (26) configured to make a pressure loss warning in the case where a state of pressure loss in the tire has been detected.

7. The rotation speed correction apparatus (2) according to any one of claims 1 to 6,
wherein the comparative value is a ratio between the rotation speed of the driving wheel tire and the rotation speed of the following wheel tire.

8. A rotation speed correction method for correcting a rotation speed of a driving wheel tire mounted on a vehicle (1), the method comprising:

obtaining the rotation speed of the driving wheel tire and a rotation speed of a following wheel tire mounted on the vehicle (1); and
calculating a comparative value between the rotation speed of the driving wheel tire and the rotation speed of the following wheel tire on the basis of the rotation speeds of the driving wheel tire and the following wheel tire,
**characterized by**
obtaining a wheel torque applied to a driving wheel of the vehicle (1);
identifying a linear relationship between the comparative value and the wheel torque; and
calculating, on the basis of the rotation speed of the following wheel tire and the linear relationship, a rotation speed of the driving wheel tire in which influence of slippage has been eliminated.

9. A rotation speed correction program for correcting a rotation speed of a driving wheel tire mounted on a vehicle (1), the program causing a computer to execute:

obtaining the rotation speed of the driving wheel tire and a rotation speed of a following wheel tire mounted on the vehicle (1); and
calculating a comparative value between the rotation speed of the driving wheel tire and the rotation speed of the following wheel tire on the basis of the rotation speeds of the driving wheel tire and the following wheel tire,
**characterized by**
obtaining a wheel torque applied to a driving wheel of the vehicle (1);
identifying a linear relationship between the comparative value and the wheel torque; and
calculating, on the basis of the rotation speed of the following wheel tire and the linear relationship, a rotation speed of the driving wheel tire in which influence of slippage has been eliminated.

**Patentansprüche**

1. Drehzahlkorrekturvorrichtung (2), die konfiguriert ist, um eine Drehzahl eines an einem Fahrzeug (1) montierten Antriebsradreifens zu korrigieren, wobei die Vorrichtung (2) aufweist:

eine Drehzahlbezugseinheit (21), die konfiguriert ist, um die Drehzahl des Antriebsradreifens und eine Drehzahl eines an dem Fahrzeug (1) montierten Nachlaufradreifens zu beziehen; und

eine Vergleichswertberechnungseinheit (23), die konfiguriert ist, um einen Vergleichswert zwischen der Drehzahl des Antriebsradreifens und der Drehzahl des Nachlaufradreifens auf der Grundlage der Drehzahlen des Antriebsradreifens und des Nachlaufradreifens zu berechnen,

**gekennzeichnet durch**

eine Drehzahlbezugseinheit (22), die konfiguriert ist, um ein Raddrehmoment, das an ein Antriebsrad des Fahrzeugs (1) angelegt wird, zu beziehen; und

eine Drehzahlberechnungseinheit (24), die konfiguriert ist, um eine lineare Beziehung zwischen dem Vergleichswert und dem Raddrehmoment zu identifizieren, und auf der Grundlage der Drehzahl des Nachlaufradreifens und der linearen Beziehung eine Drehzahl des Antriebsradreifens, bei der ein Einfluss eines Schlupfes eliminiert wurde, zu berechnen.

2. Drehzahlkorrekturvorrichtung (2) gemäß Anspruch 1,
wobei, bezüglich des Vergleichswerts, die Vergleichswertberechnungseinheit (23) konfiguriert ist, um einen ersten Vergleichswert, der eine Drehzahl von einem Antriebsradreifen und eine Drehzahl von einem Nachlaufradreifen aus zwei Antriebsradreifen und zwei Nachlaufradreifen, die an dem Fahrzeug (1) montiert sind, vergleicht, zu berechnen.

3. Drehzahlkorrekturvorrichtung (2) gemäß Anspruch 2,
wobei, bezüglich des Vergleichswerts, die Vergleichswertberechnungseinheit (23) weiterhin konfiguriert ist, um einen zweiten Vergleichswert, der eine Drehzahl des anderen Antriebsradreifens und eine Drehzahl des anderen Nachlaufradreifens aus den zwei Antriebsradreifen und den zwei Nachlaufradreifen vergleicht, zu berechnen.

4. Drehzahlkorrekturvorrichtung (2) gemäß einem der Ansprüche 1 bis 3, weiterhin mit:
einer Druckverlusterfassungseinheit (25), die konfiguriert ist, um einen Druckverlustindikatorwert zum Bestimmen eines Verlustes eines Druckes in einem an dem Fahrzeug (1) montierten Reifen auf der Grundlage der Drehzahl des Nachlaufradreifens und der Drehzahl des Antriebsradreifens, die durch die Drehzahlberechnungseinheit berechnet werden, zu berechnen, und um den Verlust des Drucks in dem Reifen auf der Grundlage des Druckverlustindikatorwerts zu erfassen.

5. Drehzahlkorrekturvorrichtung (2) gemäß Anspruch 4,

wobei, wenn vier Reifen (FL, FR, RL, RR) umfassend den Antriebsradreifen und den Nachlaufradreifen, die an dem Fahrzeug (1) montiert sind, als ein erster Reifen, ein zweiter Reifen, ein dritter Reifen und ein vierter Reifen betrachtet werden,
der Druckverlustindikatorwert ein Indikatorwert ist, der derart definiert ist, um anzusteigen, wenn die Drehzahlen des ersten Reifens und des vierten Reifens ansteigen, und abzunehmen, wenn die Drehzahlen des zweiten Reifens und des dritten Reifens abnehmen, oder anzusteigen, wenn die Drehzahlen des zweiten Reifens und des dritten Reifens ansteigen, und abzunehmen, wenn die Drehzahlen des ersten Reifens und des vierten Reifens ansteigen.

6. Drehzahlkorrekturvorrichtung (2) gemäß Anspruch 4 oder 5, weiterhin mit:
einer Druckverlustwarneinheit (26), die konfiguriert ist, um eine Druckverlustwarnung in dem Fall durchzuführen, in dem ein Zustand des Druckverlustes in dem Reifen erfasst wurde.

7. Drehzahlkorrekturvorrichtung (2) gemäß einem der Ansprüche 1 bis 6,
wobei der Vergleichswert ein Verhältnis zwischen der Drehzahl des Antriebsradreifens und der Drehzahl des Nachlaufradreifens ist.

8. Drehzahlkorrekturverfahren zum Korrigieren einer Drehzahl eines an einem Fahrzeug (1) montierten Antriebsradreifens, wobei das Verfahren aufweist:

Beziehen der Drehzahl des Antriebsradreifens und einer Drehzahl eines an dem Fahrzeug (1) montierten Nachlaufradreifens; und
Berechnen eines Vergleichswerts zwischen der Drehzahl des Antriebsradreifens und der Drehzahl des Nachlaufradreifens auf der Grundlage der Drehzahlen des Antriebsradreifens und des Nachlaufradreifens,
**gekennzeichnet durch**
Beziehen eines Raddrehmoments, das an ein Antriebsrad des Fahrzeugs (1) angelegt wird;
Identifizieren einer linearen Beziehung zwischen dem Vergleichswert und dem Raddrehmoment; und
Berechnen auf der Grundlage der Drehzahl des Nachlaufradreifens und der linearen Beziehung, einer Drehzahl des Antriebsradreifens, in dem ein Einfluss eines Schlupfes eliminiert wurde.

**9.** Drehzahlkorrekturprogramm zum Korrigieren einer Drehzahl eines an einem Fahrzeug (1) montierten Antriebsradreifens, wobei das Programm einen Computer veranlasst, um auszuführen:

Beziehen der Drehzahl des Antriebsradreifens und einer Drehzahl eines an dem Fahrzeug (1) montierten Nachlaufradreifens; und
Berechnen eines Vergleichswerts zwischen der Drehzahl des Antriebsradreifens und der Drehzahl des Nachlaufradreifens auf der Grundlage der Drehzahlen des Antriebradreifens und des Nachlaufradreifens,
**gekennzeichnet durch**
Beziehen eines Raddrehmoments, das an ein Antriebsrad eines Fahrzeugs (1) angelegt wird;
Identifizieren einer linearen Beziehung zwischen einem Vergleichswert und dem Raddrehmoment; und
Berechnen auf der Grundlage der Drehzahl des Nachlaufradreifens und der linearen Beziehung, einer Drehzahl des Antriebsradreifens, in dem ein Einfluss eines Schlupfes eliminiert wurde.

## Revendications

**1.** Appareil de correction de vitesse de rotation (2) configuré pour corriger une vitesse de rotation d'un pneu de roue motrice monté sur un véhicule (1), l'appareil (2) comprenant :

une unité d'obtention de vitesse de rotation (21) configurée pour obtenir la vitesse de rotation du pneu de roue motrice et une vitesse de rotation d'un pneu de roue suiveuse monté sur le véhicule (1) ; et
une unité de calcul de valeur comparative (23) configurée pour calculer une valeur comparative entre la vitesse de rotation du pneu de roue motrice et la vitesse de rotation du pneu de roue suiveuse sur la base des vitesses de rotation du pneu de roue motrice et du pneu de roue suiveuse,
**caractérisé par** :

une unité d'obtention de couple (22) configurée pour obtenir un couple de roue appliqué sur une roue motrice du véhicule (1) ; et
une unité de calcul de vitesse de rotation (24) configurée pour identifier une relation linéaire entre la valeur comparative et le couple de roue, et sur la base de la vitesse de rotation du pneu de roue suiveuse et de la relation linéaire, calculer une vitesse de rotation du pneu de roue motrice dans laquelle l'influence du glissement a été supprimée.

**2.** Appareil de correction de vitesse de rotation (2) selon la revendication 1,
dans lequel en tant que valeur comparative, l'unité de calcul de valeur comparative (23) est configurée pour calculer une première valeur comparative comparant une vitesse de rotation d'un pneu de roue motrice et une vitesse de rotation d'un pneu de roue suiveuse, parmi deux pneus de roue motrice et deux pneus de roue suiveuse montés sur le véhicule (1).

**3.** Appareil de correction de vitesse de rotation (2) selon la revendication 2,
dans lequel en tant que valeur comparative, l'unité de calcul de valeur comparative (23) est en outre configurée pour calculer une seconde valeur comparative comparant une vitesse de rotation de l'autre pneu de roue motrice et une vitesse de rotation de l'autre pneu de roue suiveuse, parmi les deux pneus de roue motrice et les deux pneus de roue suiveuse.

**4.** Appareil de correction de vitesse de rotation (2) selon l'une quelconque des revendications 1 à 3, comprenant en outre :
une unité de détection de perte de pression (25) configurée pour calculer une valeur d'indication de perte de pression pour déterminer une perte de pression d'un pneu monté sur le véhicule (1) sur la base de la vitesse de rotation du pneu de roue suiveuse et la vitesse de rotation du pneu de roue motrice calculée par l'unité de calcul de vitesse de rotation, et détecter la perte de pression dans le pneu sur la base de la valeur d'indication de perte de pression.

**5.** Appareil de correction de vitesse de rotation (2) selon la revendication 4,

dans lequel lorsque les quatre pneus (FL, FR, RL, RR) comprenant le pneu de roue motrice et le pneu de roue suiveuse montés sur le véhicule (1) sont pris comme étant un premier pneu, un deuxième pneu, un troisième pneu et un quatrième pneu,
la valeur d'indication de perte de pression est une valeur d'indication définie pour augmenter lorsque les vitesses de rotation du premier pneu et du quatrième pneu augmentent et diminuer lorsque les vitesses de rotation du deuxième pneu et du troisième pneu augmentent, ou pour augmenter lorsque les vitesses de rotation du deuxième pneu et du troisième pneu augmentent et diminuer lorsque les vitesses de rotation du premier pneu et du quatrième pneu augmentent.

**6.** Appareil de correction de vitesse de rotation (2) selon la revendication 4 ou 5, comprenant en outre :
une unité d'avertissement de perte de pression (26) configurée pour établir un avertissement de perte de pression dans le cas dans lequel un état de perte de pression dans le pneu a été détecté.

**7.** Appareil de correction de vitesse de rotation (2) selon l'une quelconque des revendications 1 à 6,
dans lequel la valeur comparative est un rapport entre la vitesse de rotation du pneu de roue motrice et la vitesse de rotation du pneu de roue suiveuse.

**8.** Procédé de correction de vitesse de rotation pour corriger une vitesse de rotation d'un pneu de roue motrice monté sur un véhicule (1), le procédé comprenant les étapes suivantes :

obtenir la vitesse de rotation du pneu de roue motrice et une vitesse de rotation d'un pneu de roue suiveuse, montés sur le véhicule (1) ; et
calculer une valeur comparative entre la vitesse de rotation du pneu de roue motrice et la vitesse de rotation du pneu de roue suiveuse sur la base des vitesses de rotation du pneu de roue motrice et du pneu de roue suiveuse,
**caractérisé par** les étapes suivantes :

obtenir un couple de roue appliqué sur une roue motrice du véhicule (1) ;
identifier une relation linéaire entre la valeur comparative et le couple de roue ; et
calculer, sur la base de la vitesse de rotation du pneu de roue suiveuse et de la relation linéaire, une vitesse de rotation du pneu de roue motrice dans laquelle l'influence du glissement a été supprimée.

**9.** Programme de correction de vitesse de rotation pour corriger une vitesse de rotation d'un pneu de roue motrice monté sur un véhicule (1), le programme amenant un ordinateur à exécuter les étapes suivantes :

obtenir la vitesse de rotation du pneu de roue motrice et une vitesse de rotation d'un pneu de roue suiveuse, montés sur le véhicule (1) ; et
calculer une valeur comparative entre la vitesse de rotation du pneu de roue motrice et la vitesse de rotation du pneu de roue suiveuse sur la base des vitesses de rotation du pneu de roue motrice et du pneu de roue suiveuse,
**caractérisé par** les étapes suivantes :

obtenir un couple de roue appliqué sur une roue motrice du véhicule (1) ;
identifier une relation linéaire entre la valeur comparative et le couple de roue ; et
calculer, sur la base de la vitesse de rotation du pneu de roue suiveuse et de la relation linéaire, une vitesse de rotation du pneu de roue motrice dans laquelle l'influence du glissement a été supprimée.

Fig.1

ROTATION SPEED
CORRECTION APPARATUS

FL

FR

RL

RR

Fig.2

ROTATION SPEED CORRECTION APPARATUS (CONTROL UNIT) — 2 — 3

CPU — 12

ROTATION SPEED OBTAINMENT UNIT — 21

TORQUE OBTAINMENT UNIT — 22

COMPARATIVE VALUE CALCULATION UNIT — 23

ROTATION SPEED CALCULATION UNIT — 24

PRESSURE LOSS DETECTION UNIT — 25

PRESSURE LOSS WARNING UNIT — 26

I/O INTERFACE — 11

STORAGE DEVICE — 15

RAM — 14

ROM — 13
8
PROGRAM

6
6
6
6
7

9

# Fig.3

```
                    ┌─────────────┐
                    │    START    │
                    └──────┬──────┘
                           │
         ┌─────────────────────────────────────────┐  S1
         │   OBTAIN ROTATION SPEEDS V1 TO V4        │
         └─────────────────┬───────────────────────┘
                           │
         ┌─────────────────────────────────────────┐  S2
         │        OBTAIN WHEEL TORQUE WT            │
         └─────────────────┬───────────────────────┘
                           │
         ┌─────────────────────────────────────────┐  S3
         │   CALCULATE COMPARATIVE VALUES H1 AND H2 │
         └─────────────────┬───────────────────────┘
                           │
                    ┌──────────────┐        no
                    │  NUMBER OF   ├──────────────┐
                    │ DATA SETS 30?│              │
                    └──────┬───────┘              │
                           │ yes                  │
         ┌─────────────────────────────────────────┐  S4
         │ IDENTIFY LINEAR RELATIONSHIP BETWEEN     │
         │ COMPARATIVE VALUES H1 AND H2 AND WHEEL   │
         │ TORQUE WT (CALCULATE REGRESSION LINES    │
         │           L1 AND L2)                     │
         └─────────────────┬───────────────────────┘
                           │
         ┌─────────────────────────────────────────┐  S5
         │      CALCULATE POST-CORRECTION           │
         │      ROTATION SPEEDS V1' AND V2'         │
         └─────────────────┬───────────────────────┘
                           │
         ┌─────────────────────────────────┐  S6
         │    CALCULATE DEL1, DEL2, DEL3    │
         └─────────────────┬───────────────┘
                           │        S7
                    ┌──────────────┐        no
                    │ PRESSURE LOSS?├─────────────┐
                    └──────┬───────┘              │
                           │ yes                  │
         ┌─────────────────────────────┐  S8      │
         │       OUTPUT WARNING         │         │
         └─────────────────┬───────────┘         │
                           │                      │
                    ┌──────────────┐              │
                    │     END      │              │
                    └──────────────┘              │
```

## Fig.4

## Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4809199 B
- EP 0652121 A1
- JP 2004338456 A
- JP 2016112916 A